# EUROPÄISCHE PATENTSCHRIFT

(11) **EP 3 481 720 B1**
(45) Veröffentlichungstag und Bekanntmachung des Hinweises auf die Patenterteilung: **12.05.2021**
(21) Anmeldenummer: 17739849.2
(22) Anmeldetag: 04.07.2017
(51) Int. Cl.: B64C 39/02, G09F 21/06

(54) **UNBEMANNTES LUFTFAHRZEUG UND SYSTEM ZUM ERZEUGEN EINER ABBILDUNG IM LUFTRAUM**
UNMANNED AIRCRAFT AND SYSTEM FOR GENERATING AN IMAGE IN THE AIRSPACE
AÉRONEF SANS PILOTE ET SYSTÈME DE CRÉATION D'UNE REPRÉSENTATION DANS L'ESPACE AÉRIEN

(30) Priorität: 11.07.2016 AT 5013716 U
(43) Veröffentlichungstag der Anmeldung: 15.05.2019
(73) Patentinhaber: Ars Electronica Linz GmbH & Co KG, 4040 Linz (AT)
(72) Erfinder: HÖRTNER, Horst, 4115 Kleinzell (AT)
(74) Vertreter: Röggla, Harald
(86) Internationale Anmeldenummer: PCT/AT2017/060166
(87) Internationale Veröffentlichungsnummer: WO 2018/009950

(56) Entgegenhaltungen:
- WO-A1-2015/189043
- WO-A1-2015/199535
- WO-A1-2016/065343
- DE-U1-202015 001 491
- US-A1- 2012 044 710
- US-A1- 2014 277 854
- US-B2- 8 862 285

## Beschreibung

Die Erfindung betrifft ein System zum Erzeugen einer Abbildung im Luftraum bestehend aus zumindest zwei unbemannten Luftfahrzeugen. Hierfür sind Beispiele eines unbemannten Luftfahrzeugs offenbart, aufweisend eine Antriebseinheit zum Ermöglichen des Fluges des Luftfahrzeugs im Luftraum und eine Datenverarbeitungseinheit, die zum Ansteuern einer Position oder einer zeitlichen Abfolge von Positionen des Luftfahrzeugs im Luftraum im Wesentlichen in Echtzeit anhand von Positionsinformationen ausgebildet ist.

Bei der Darstellung von Kunst oder Information in der Unterhaltungsindustrie, bei öffentlichen und privaten Veranstaltungen beziehungsweise im Allgemeinen ist es oft wünschenswert, eine Abbildung im Luftraum bereitzustellen. Dies kann beispielsweise durch den Einsatz von Feuerwerkskörpern, das Ziehen eines Banners oder eines ähnlichen Displays durch ein Flugzeug, das Anstrahlen von Wasserfontänen mittels Licht, das Projizieren von Abbildungen auf ortsfeste Hochhausfassaden oder bei Flugvorführungen mittels Unterstützung von eingefärbtem Rauch erfolgen.

All die oben genannten beispielhaften Möglichkeiten zum Bereitstellen einer Abbildung im Luftraum weisen allgemeine und/ oder spezifische Nachteile auf. Folgend werden einige derartige Nachteile beispielhaft angeführt: Der Einsatz von Feuerwerkskörpern birgt ein Gefahrenpotential, hat negative Auswirkungen auf die Umwelt und die Explosion eines Feuerwerkskörpers ist zeitlich eingeschränkt und in seiner Position nicht exakt steuerbar. Eine Flugshow birgt ein erhebliches Gefahrenpotential, ist äußerst kostspielig und die Flugzeuge bewegen sich grundsätzlich viel zu schnell, um komplexe oder informative Abbildungen zu ermöglichen. Beim Ziehen eines Banners sind die Nachteile ähnlich: Die Abbildung beziehungsweise Information am Banner ist statisch, lediglich zweidimensional und meist schlecht erkennbar. Das Anstrahlen von Wasserfontänen mittels Licht ist in seiner Höhe, Dreidimensionalität und Komplexität begrenzt. Keine dieser Lösungen ermöglicht es eine Abbildungen im Luftraum zu schaffen, die eine gewisse Mindestgröße aufweisen, im Wesentlichen abbildungsgleich wiederholbar, dynamisch, interaktiv und wiederverwendbar sind.

Die Entwicklung der letzten Jahre auf dem technischen Gebiet der unbemannten Luftfahrzeuge, im englischen Sprachgebrauch üblicherweise als "Unmanned Aerial Vehicle (UAV)" bezeichnet, insbesondere im Bereich der "Drohnen" beziehungsweise "Multicopter", haben dazu geführt, dass solche Luftfahrzeuge für die Bereitstellung derartiger Abbildungen im Luftraum zum Einsatz kommen.

So wurden beispielsweise bei der öffentlichen Musikveranstaltung "Klangwolke" am 01. September 2012 in Linz, Österreich, 49 "Quadcopter" zu einem dynamischen Schwarmverbund kombiniert, um dynamische Abbildungen und Visualisierungen im Luftraum darzustellen. Jeder Quadcopter wies einen Lichtdiffusions-Schirm auf und innerhalb dieses Schirms ein LED-Leuchtmittel. Somit bildete jeder Quadcopter einen "Bildpunkt" der Abbildung im Luftraum, einen sogenannten "SPAXEL".

Das Dokument US 8,862,285 B2 offenbart ein vergleichbares System zum Durchführen einer Luft-Abbildung mit einer Vielzahl von unbemannten Luftfahrzeugen, die jeweils steuerbare LED-Leuchtmittel innerhalb eines Lichtdiffusions-Zylinders tragen, und somit jeweils als Bildpunkt einer Abbildung im Luftraum dienen. Die LED-Leuchtmittel können ihre Farbe zeitlich ändern, wobei die Abbildung im Luftraum ebenfalls zeitlich veränderbar ist.

Die beiden zuvor genannten Systeme haben den Nachteil, dass mit den eingesetzten Luftfahrzeugen lediglich Punktdarstellungen ermöglicht sind, was die Darstellungsmöglichkeiten der Abbildung im Luftraum beschränkt.

Das Dokument US 2012/0044710 A1 offenbart ein in der Luft eingesetztes Beleuchtungssystem, das ferngesteuert oder vorprogrammiert werden kann, um ein bestimmtes Ziel wie ein geografisches Gebiet, ein Fahrzeug oder Personal zu beleuchten. Insbesondere wird ein ferngesteuertes UAV mit einem darauf angeordneten Beleuchtungssystem bereitgestellt, wobei das Beleuchtungssystem aus einer konzentrierten Lichtquelle und einer Lichtbewegungsvorrichtung besteht, die das Ziel mit der Lichtquelle schnell abtasten können, wodurch eine Illusion eines großen Beleuchtungsbereichs bereitgestellt wird. Das System kann ferner eine Vielzahl von UAVs enthalten, die zur Ad-hoc-Vernetzung fähig sind, um sowohl große Bereiche als auch stationäre und sich bewegende Ziele zu beleuchten.

Der Erfindung liegt die Aufgabe zugrunde ein System bereitzustellen, das die Sichtbarkeit einer Abbildung im Luftraum verbessert und deren Darstellungsmöglichkeiten erweitert.

Erfindungsgemäß wird diese Aufgabenstellung durch ein System zum Erzeugen einer Abbildung im Luftraum bestehend aus zumindest zwei unbemannten Luftfahrzeugen gemäß dem beigefügten unabhängigen Anspruch 1 gelöst. Offenbart sind Beispiele für Luftfahrzeuge, bei denen das Luftfahrzeug zumindest ein LASER-Mittel zum Abgeben und/ oder zum Manipulieren zumindest eines LASER-Strahls aufweist und, wobei das Luftfahrzeug eine Kommunikationseinheit aufweist, wobei die Datenverarbeitungseinheit zum Empfangen und/oder Übermitteln der Positionsinformationen mittels der Kommunikationseinheit im Wesentlichen in Echtzeit ausgebildet ist.

Ein LASER-Strahl ist auch bei trüben Luftverhältnissen und bei Tageslicht gut sichtbar. Durch die Kombination oder Manipulation mehrerer LASER-Strahlen können komplexe Abbildungen mit Kanten, aufgefächerten Strahlen, etc. in den Luftraum "gezeichnet" werden. Dadurch, dass LASER-Strahlen in einem sehr weitem Frequenzbereich extrem kurz, und mit exakter Wiederholfrequenz gepulst werden können, lässt sich eine hohe Dynamik der Abbildung im Luftraum erzeugen. Folglich wird durch die Erfindung der Vorteil erhalten, dass komplexe und sehr große Abbildungen im Luftraum bereitgestellt werden können, die im Wesentlichen abbildungsgleich wiederholbar, dynamisch und interaktiv sind und dank ihrer hohen Lichtintensität eine verbesserte Sichtbarkeit und erhöhte Darstellungsmöglichkeiten aufweisen.

Weist das Luftfahrzeug zusätzlich eine Kommunikationseinheit auf und ist die Datenverarbeitungseinheit zum Empfangen und Übermitteln der Positionsinformationen mittels der Kommunikationseinheit im Wesentlichen in Echtzeit ausgebildet, dann kann das Luftfahrzeug vorteilhaft von einem externen Steuergerät, beispielsweise einer Bodensteuereinheit, im Wesentlichen in Echtzeit im Luftraum gesteuert werden, wodurch auch die Abbildung im Luftraum im Wesentlichen in Echtzeit gesteuert werden kann.

Weist das Luftfahrzeug zusätzlich eine Speichereinheit auf, wobei die Speichereinheit die Positionsinformationen aufweist, und wobei Datenverarbeitungseinheit zum Empfangen der Positionsinformationen von der Speichereinheit und zum Übermitteln der Positionsinformationen auf die Speichereinheit ausgebildet ist, dann kann das Luftfahrzeug vorteilhaft im Luftraum vollkommen automatisiert gesteuert werden, ohne weiters in die Abfolge der Positionen des Luftfahrzeugs eingreifen zu müssen, wodurch die Abbildung im Luftraum im Wesentlichen vollkommen automatisiert dargestellt werden kann.

Vorteilhaft ist das Luftfahrzeug als Drohne, beispielsweise als Multicopter, ausgebildet. Hierdurch kann das Luftfahrzeug günstig angeschafft und angepasst werden, und die Flugstabilität sowie die Steuerbarkeit per Positionsinformationen, die beispielsweise dreidimensionale GPS-Koordinaten sein können, ist präzise, und das Luftfahrzeug kann im Wesentlichen unendlich lange an einer Position im Luftraum gehalten werden.

In einer vorteilhaften Ausgestaltung eines Luftfahrzeugs ist das zumindest eine LASER-Mittel mittels einem Ausrichtemittel zumindest einachsig, vorzugsweise zweiachsig, drehbar an dem Luftfahrzeug befestigt ausgebildet, wobei die Datenverarbeitungseinheit zum Steuern der Ausrichtung des LASER-Mittels mittels des Ausrichtemittels anhand von Ausrichteinformationen ausgebildet ist. So kann die Richtung eines LASER-Strahls vorteilhaft verändert werden, während das Luftfahrzeug beispielsweise an einer Position im Luftraum gehalten oder von einer Position im Luftraum zu einer nächstfolgenden Position im Luftraum bewegt wird.

In einer Ausgestaltung eines Luftfahrzeugs weist das zumindest eine LASER-Mittel zumindest einen LASER-Generator, insbesondere eine LASER-Diode, zum Abgeben des zumindest eines LASER-Strahls auf. Hierdurch ist der Vorteil erhalten, dass das Luftfahrzeug selbst einen LASER-Strahl generieren kann, wodurch das Luftfahrzeug, beziehungsweise das LASER-Mittel, den Anfangspunkt des LASER-Strahls bildet. Als LASER-Generator ist somit eine Lichtquelle zu verstehen, die einen starken gebündelten parallelen Lichtstahl abgibt. Dieser starke Lichtstrahl wird im Unterschied zu Lichtstrahlen von bekannten LED-Leuchtmitteln bzw. LEDs oft in der Abbildungsebene der Abbildung im Raum zur Darstellung eines Strichs genutzt, während Lichtstrahlen der LEDs im Wesentlichen senkrecht aus der Abbildungsebene leuchtend einen Lichtpunkt darstellend ausgerichtet werden.

In einer weiteren vorteilhaften Ausgestaltung eines Luftfahrzeugs weist das zumindest eine LASER-Mittel zumindest einen LASER-Absorber zum Absorbieren des zumindest eines LASER-Strahls auf. Hierdurch ist der Vorteil erhalten, dass das Luftfahrzeug einen LASER-Strahl absorbieren kann, wodurch das Luftfahrzeug, beziehungsweise das LASER-Mittel, den Endpunkt des LASER-Strahls bildet.

In einer weiteren vorteilhaften Ausgestaltung eines Luftfahrzeugs weist das zumindest eine LASER-Mittel zumindest einen LASER-Reflektor, insbesondere einen Spiegel, zum Reflektieren des zumindest einen LASER-Strahls auf. Hierdurch ist der Vorteil erhalten, dass das Luftfahrzeug, beziehungsweise das LASER-Mittel, einen LASER-Strahl ab- oder umlenken kann, wodurch das Luftfahrzeug, beziehungsweise das LASER-Mittel, einen Umlenkpunkt des LASER-Strahls bildet.

In einer weiteren vorteilhaften Ausgestaltung eines Luftfahrzeugs weist das zumindest eine LASER-Mittel zumindest einen LASER-Diffusor zum diffusen Zerstreuen des zumindest eines LASER-Strahls oder zum Multiplizieren, insbesondere Auffächern, des zumindest eines LASER-Strahls in mehrere LASER-Strahlen auf. Hierdurch ist der Vorteil erhalten, dass das Luftfahrzeug beziehungsweise das LASER-Mittel, einen LASER-Strahl multiplizieren, beispielsweise auffächern, kann, wodurch das Luftfahrzeug, beziehungsweise das LASER-Mittel, einen Umlenkpunkt oder einen Multiplikatorpunkt des LASER-Strahls bildet.

Erfindungsgemäß bilden mehrere unbemannte Luftfahrzeuge ein System zum Erzeugen der Abbildung im Luftraum, wobei während einer Abbildungsphase die Abbildung im Luftraum aus zumindest einem, von den Luftfahrzeugen abgegebenen und manipulierten LASER-Strahl erzeugt wird, wobei die Positionsinformationen, und besonders vorteilhaft zusätzlich die Ausrichteinformationen, als, auf die Abbildung Bezug nehmende Abbildungsinformationen ausgebildet sind.

Vorteilhaft sind die Datenverarbeitungseinheiten der Luftfahrzeuge mittels der jeweiligen Kommunikationseinheiten zum wechselseitigen Kommunizieren im Wesentlichen in Echtzeit ausgebildet, wodurch die Luftfahrzeuge im Luftraum in einem Schwarmverbund ansteuerbar sind. Hierdurch können besonders komplexe und besonders große Abbildungen mittels einer großen Anzahl von Luftfahrzeugen, beispielsweise 100 und mehr, im Luftraum geschaffen werden.

Ein erfindungsgemäßes System zum Erzeugen einer Abbildung im Luftraum kann zusätzlich eine Bodensteuereinheit aufweisen, die zum Speichern, Verarbeiten, Übermitteln und/ oder Empfangen der Abbildungsinformationen ausgebildet ist, wobei die Abbildungsinformationen mittels einer Bodenkommunikationseinheit der Bodensteuereinheit über die Kommunikationseinheiten der Luftfahrzeuge im Wesentlichen in Echtzeit an die Datenverarbeitungseinheiten der Luftfahrzeuge übermittelt werden. Hierdurch können besonders komplexe und besonders große Abbildungen mittels einer großen Anzahl von Luftfahrzeugen, beispielsweise 100 und mehr, im Luftraum geschaffen werden, ohne dass die Luftfahrzeuge miteinander kollidieren, wobei Teile der Luftfahrzeuge oder alle Luftfahrzeuge extern von der Bodensteuereinheit gesteuert werden.

In einer weiteren vorteilhaften Ausgestaltung eines erfindungsgemäßen Systems zum Erzeugen einer Abbildung im Luftraum weist das System zusätzlich eine ortsfeste Projektionsfläche auf, beispielsweise eine Fassade eines Gebäudes oder eine durch Luftfahrzeuge im Luftraum positionierte Leinwand, auf welche die Abbildung projiziert wird. Hierdurch kann die Sichtbarkeit der Abbildung weiter verbessert und/oder die Komplexität erhöht werden.

Im Folgenden werden das erfindungsgemäße System und das erfindungsgemäße Verfahren in nicht einschränkender Weise anhand von, in den Zeichnungen dargestellten beispielhaften Ausgestaltungen näher erläutert.
Figur 1 zeigt in einer perspektivischen schematischen Ansicht ein unbemanntes Luftfahrzeug gemäß einem ersten Beispiel.
Figur 2 zeigt in einer perspektivischen schematischen Ansicht ein unbemanntes Luftfahrzeug gemäß einem zweiten Beispiel.
Figur 3 zeigt in einer perspektivischen schematischen Ansicht ein unbemanntes Luftfahrzeug gemäß einem dritten Beispiel.
Figur 4 zeigt in einer perspektivischen schematischen Ansicht ein System zum Erzeugen einer Abbildung im Luftraum.
Figur 5 zeigt in einer schematischen Ansicht von oben ein weiteres System zum Erzeugen einer Abbildung im Luftraum.

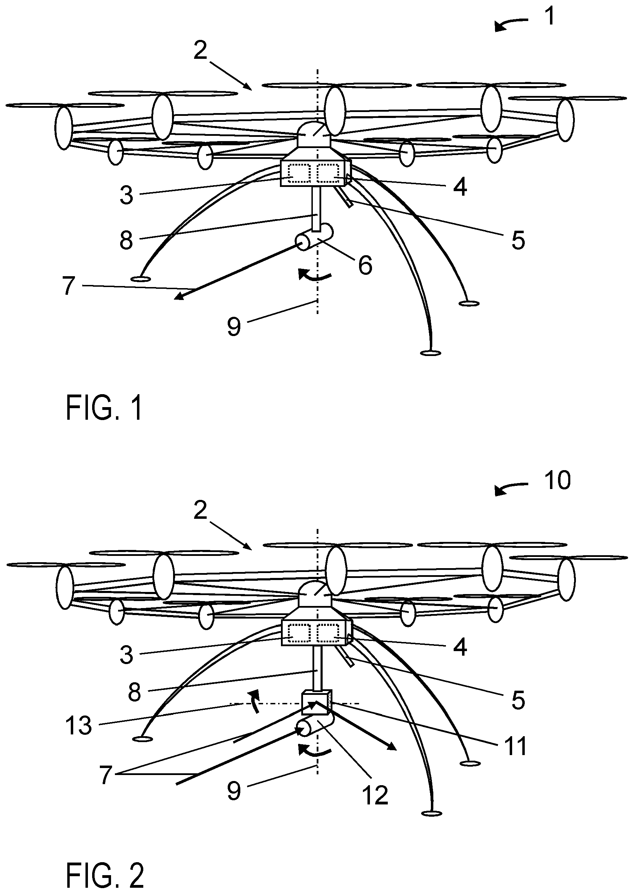

Figur 1 zeigt ein unbemanntes Luftfahrzeug 1 gemäß einem ersten Beispiel. Das Luftfahrzeug 1 ist als Drohne, genauer bezeichnet als sogenannter "Oktocopter" ausgeführt. Dabei besteht eine Antriebseinheit 2 des Luftfahrzeugs 1 aus acht Rotoreinheiten, die beispielsweise mittels acht Elektromotoren angetrieben werden. Die Antriebseinheit 2 ermöglicht den Flug des Luftfahrzeugs 1 im Luftraum.

Ein "Okotocopter" ist eine Variante eines "Multicopters" mit acht Rotoreinheiten. Das Luftfahrzeug 1 kann alternativ als eine andere Variante eines Multicopters ausgebildet sein, beispielsweise als "Quadcopter" mit vier Rotoreinheiten, usw., wobei im Wesentlichen jede Anzahl von Rotoreinheiten möglich ist. Das unbemannte Luftfahrzeug 1 kann aber auch ein beliebiges, als ein, in seiner Position im Luftraum, stabilisierbares Luftfahrzeug, ausgebildet sein (etwa Zeppelin, Ballon uvam).

Der Begriff "Luftraum" bezieht sich dabei auf jeden möglichen Raum oberhalb eines künstlichen oder natürlichen Bodens innerhalb oder außerhalb eines künstlichen oder natürlichen Raumes beziehungsweise Gebäudes.

Das Luftfahrzeug 1 weist weiters eine Datenverarbeitungseinheit 3 auf, die zum Ansteuern einer Position oder einer zeitlichen Abfolge von Positionen des Luftfahrzeugs 1 im Luftraum im Wesentlichen in Echtzeit anhand von Positionsinformationen ausgebildet ist. Die Positionsinformationen sind beispielsweise "Global Positioning System (GPS)"-basierte, dreidimensionale Koordinaten im Luftraum, also beispielsweise Daten im GPS Exchange Format (GPX). Die Daten im GPX-Format können Geodäten, also die geografischen Koordinaten Breite, Länge und Höhe, beinhalten. Alternativ können die Daten auch auf dem Galileo-, GLONASS-, Beidou/Compass- oder jedem weiteren Satellitennavigations- und/ oder Zeitgebungssystem oder auf einem lokalen oder gebäudebasierten Navigationssystem zur Positionsbestimmung des Luftfahrzeuges innerhalb und außerhalb von Gebäuden basieren (etwa Positionsbestimmung durch Übermittlung von Sendesignalen, Optische Positionsbestimmungssysteme etc.).

Der Ausdruck "einer zeitlichen Abfolge von Positionen" entspricht im Wesentlichen einer vorgegebene Route oder einem vorgegebenen "Track", die oder der ebenfalls Daten im GPX-Format sein können. Das Ausmaß der zeitlichen Abfolge bestimmt die Fluggeschwindigkeit des Luftfahrzeugs 1. Vorteilhaft ist insbesondere die "zeitliche Abfolge von Positionen" auch zur Laufzeit des Systems zum Beispiel durch die Interaktion eines Benutzers abzuändern, oder neue Positionen eines oder mehrerer Luftfahrzeuge aus der Interaktion des Benutzers abzuleiten. Dabei ist es unwesentlich in welcher Art die Interaktion des Benutzers dem System übermittelt wird. Besonders vorteilhaft ist die Verwendung einer Kommunikationseinheit zur Übermittlung der veränderten Positionen, oder veränderten, zeitlichen Abfolgen von Positionen an die Luftfahrzeuge.

Mit der Datenverarbeitungseinheit 3 ist es somit möglich, das Luftfahrzeug 1 mit einer bestimmten Fluggeschwindigkeit an eine bestimmte Position im Luftraum oder entlang einer bestimmten Route im Luftraum zu steuern. Hierzu werden die Rotoren der Antriebseinheit 2 von der Datenverarbeitungseinheit 3 entsprechend gesteuert. Zusätzlich weist das Luftfahrzeug 1 beispielsweise einen GPS-Empfänger auf, um so jederzeit die aktuelle Position des Luftfahrzeugs 1 mit der vorgegebene Position oder Route anhand der Positionsinformationen abzugleichen.

Das "Ansteuern einer zeitliche Abfolge von Positionen des Luftfahrzeugs 1 im Luftraum" bezeichnet somit unter anderem das Steuern einer Bewegung beziehungsweise Flugbahn des Luftfahrzeugs 1 im Luftraum, also im Wesentlichen das Steuern des Flugs des Luftfahrzeugs 1 im Luftraum.

Die Positionsinformationen sind in einer Speichereinheit 4 gespeichert. Die Datenverarbeitungseinheit 3 empfängt die Positionsinformationen von der Speichereinheit 4 und steuert das Luftfahrzeug 1 entsprechend dieser Positionsinformationen. Zusätzlich kann die Datenverarbeitungseinheit 3 die aktuellen Positionsinformationen auf die Speichereinheit 4 übermitteln, wo sie gespeichert werden, beispielsweise zur Kontrolle oder als Backup.

Zusätzlich weist das Luftfahrzeug 1 eine Kommunikationseinheit 5 auf. Die Datenverarbeitungseinheit 3 kann so die Positionsinformationen auch von einem externen Steuergerät, beispielsweise von einem Laptop, einem Smartphone oder einer Bodensteuereinheit, empfangen oder die aktuellen Positionsinformationen an dieses externe Steuergerät schicken. Dabei werden die Positionsinformationen im Wesentlichen in Echtzeit empfangen oder übermittelt, wodurch eine reibungsfreie Kommunikation gewährleistet wird, und wodurch die vom Luftfahrzeug 1 anzusteuernde Position im Luftraum gegebenenfalls jederzeit aktualisiert werden kann.

Die Kommunikationseinheit 5 des Luftfahrzeugs 1 kann auch dazu ausgebildet sein, mit der Kommunikationseinheit 5 eines weiteren Luftfahrzeugs 1 zu kommunizieren. Hierauf wird später näher eingegangen.

Das Luftfahrzeug 1 gemäß dem ersten Beispiel weist weiters ein LASER-Mittel auf. Die Datenverarbeitungseinheit 3 ist zum Steuern des LASER-Mittels ausgebildet. Alternativ kann das LASER-Mittel auch von einem externen Steuergerät, beispielsweise von einem Laptop, einem Smartphone oder einer Bodensteuereinheit, gesteuert werden. Das LASER-Mittel weist einen LASER-Generator 6 zum Abgeben eines LASER-Strahls 7 auf. Der LASER-Generator 6 bildet im vorliegenden Fall den Anfangspunkt des LASER-Strahls 7.

Das Akronym "LASER" steht hierbei für "Light Amplification by Stimulated Emission of Radiation (Deutsch: "Licht-Verstärkung durch stimulierte Emission von Strahlung"). Das LASER-Mittel ist somit jedes erdenkliche Mittel zur Abgabe oder Manipulation zumindest eines LASER-Strahls, also eines Strahls bestehend aus elektromagnetischen Wellen von hoher Intensität, gegebenenfalls engem Frequenzbereich (monochromatisches Licht), scharfer Bündelung des Strahls und großer Kohärenzlänge.

Das LASER-Mittel, beziehungsweise der LASER-Generator 6 ist an einem Ausrichtemittel 8 befestigt, welches mindestens einachsig, etwa um eine Symmetrieachse 9 des Luftfahrzeugs 1, beziehungsweise des Ausrichtemittels 8, drehbar ist. Vorteilhaft sind besonders auch Drehungen über mehrere Achsen, zum Beispiel um die horiziontale und die vertikale Achse, sowie die Rotation um diese Achsen. Die Datenverarbeitungseinheit 3 ist zum Steuern der Ausrichtung des LASER-Generators 6 mittels des Ausrichtemittels 8 anhand von Ausrichteinformationen ausgebildet.

Während sich das Luftfahrzeug 1 in einer stabilen, im Wesentlichen statischen Position im Luftraum befindet, ist die Symmetrieachse 9 im Wesentlichen lotrecht ausgerichtet. Alternativ kann die Ausrichtung des LASER-Mittels auch über die Ausrichtung des Luftfahrzeugs 1 im Luftraum erfolgen. Beispielsweise kann dadurch die Ausrichtung des LASER-Mittels eine abweichende Ausrichtung des Luftfahrzeuges 1 kompensieren oder verstärken.

Die Ausrichteinformationen können beispielsweise eine Winkel- und Zeitinformation beinhalten, also in welchem Winkel um die Symmetrieachse 9 das Ausrichtemittel 8 zu welchem Zeitpunkt ausgerichtet sein soll. Dabei können die Ausrichteinformationen mit den Positionsinformationen zeitlich oder räumlich synchronisiert sein, wodurch die Ausrichtung des LASER-Generators 6 an die jeweilige aktuelle Position des Luftfahrzeugs 1 angepasst werden kann.

Der LASER-Generator 6 kann beispielsweise eine LASER-Diode sein. Der LASER-Generator 6 kann alternativ als jede andere Form von LASER-Modul, LASER-Quelle oder LASER-System zur Erzeugung und Abgabe eines LASER-Strahls 7 ausgebildet sein.

Der LASER-Generator 6 kann durch die Datenverarbeitungseinheit 3 oder von dem externen Steuergerät über die Kommunikationseinheit 5 gesteuert werden. Parameter wie Lichtstrom, durchgehende oder gepulste Abgabe und/ oder Lichtfarbe können so jederzeit geändert werden.

Das Luftfahrzeug 1 kann somit eine Abbildung im Luftraum mittels eines LASER-Strahls 7 erzeugen, wobei die Abbildung anhand der zeitlichen Veränderung der Position des Luftfahrzeugs 1 im Luftraum anhand der Positionsinformationen und/oder anhand der zeitlichen Veränderung der Ausrichtung des Ausrichtemittels 8 anhand der Ausrichteinformationen räumlich und zeitlich variiert werden kann.

Das LASER-Mittel kann eine Mehrzahl an LASER-Generatoren 6 aufweisen, beispielsweise 2 bis 10 oder mehr als 10. Diese LASER-Generatoren 6 können gemeinsam oder unabhängig voneinander mittels des Ausrichtemittels 8 ausgerichtet werden und von der Datenverarbeitungseinheit 3 gesteuert und verändert werden.

Figur 2 zeigt ein unbemanntes Luftfahrzeug 10 gemäß einem zweiten Beispiel. Das Luftfahrzeug 10 ist im Wesentlichen gleich dem Luftfahrzeug 1 gemäß dem ersten Beispiel ausgebildet. Unterschiedlich sind die LASER-Mittel, die im Falle des Luftfahrzeugs 10 gemäß dem zweiten Beispiel einen LASER-Reflektor 11 sowie einen LASER-Absorber 12 aufweisen. Zusätzlich sind die Ausrichtemittel 8 zweiachsig drehbar, nämlich um die Symmetrieachse 9 des Luftfahrzeugs 1 und um eine Schwenkachse 13 des Ausrichtemittels 8.

Die Schwenkachse 13 ist im Wesentlichen rechtwinklig zur Symmetrieachse 9 angeordnet. Während sich das Luftfahrzeug 1 in einer stabilen, im Wesentlichen statischen Position im Luftraum befindet, ist die Symmetrieachse 9 im Wesentlichen lotrecht ausgerichtet. Die Schwenkachse 13 ist in diesem Fall im Wesentlichen horizontal ausgerichtet. Die Schwenkachse 13 kann alternativ anders angeordnet sein. Das Ausrichtemittel 8 kann alternativ um beliebig viele beliebig angeordnete Achsen rotierbar sein. Alternativ kann die Ausrichtung des LASER-Mittels auch über die Ausrichtung des Luftfahrzeugs 10 im Luftraum erfolgen.

Der LASER-Reflektor 11, beispielsweise ein Spiegel, reflektiert einen, beispielsweise von einem LASER-Generator 6 eines weiteren Luftfahrzeugs 1 oder von einem am Erdboden vorgesehenen LASER-Generator 6 abgegebenen LASER-Strahl 7 entsprechend den physikalischen Gesetzen der Optik. Die Energie beziehungsweise der Lichtstrom des LASER-Strahls 7 bleibt dabei im Wesentlichen erhalten. Der LASER-Strahl 7 wird entsprechend ab- oder umgelenkt, beispielsweise zu einem weiteren Luftfahrzeug 10 wo er nochmals umgelenkt oder absorbiert wird. Das Luftfahrzeug 10, beziehungsweise der LASER-Reflektor 11, bildet somit einen Umlenkpunkt des LASER-Strahls 7.

Der LASER-Absorber 12, beispielsweise eine Strahlenfalle, absorbiert einen, beispielsweise von einem LASER-Generator 6 am Boden abgegebenen LASER-Strahl 7. Die Energie beziehungsweise der Lichtstrom des LASER-Strahls 7 wird dabei im Wesentlichen als Wärme abgegeben. Das Luftfahrzeug 10, beziehungsweise das LASER-Mittel, bildet somit den Endpunkt des LASER-Strahls 7.

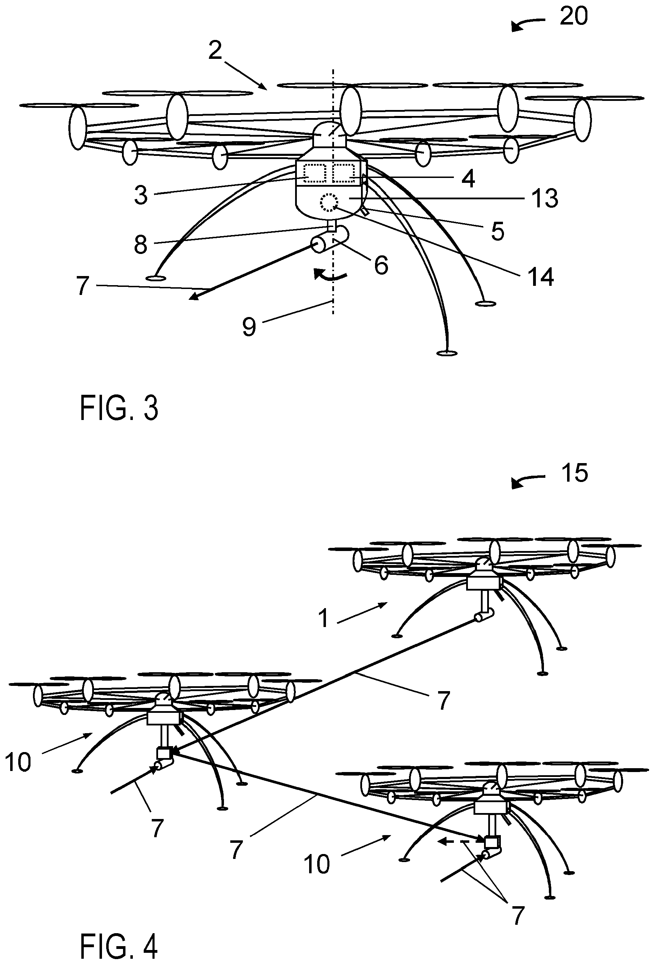

Figur 3 zeigt ein unbemanntes Luftfahrzeug 20 gemäß einem dritten Beispiel. Das Luftfahrzeug 20 ist im Wesentlichen gleich dem Luftfahrzeug 1 gemäß dem ersten Beispiel ausgebildet. Unterschiedlich ist, dass das Luftfahrzeug 20 gemäß dem dritten Beispiel zusätzlich einen Lichtdiffusionsschirm 13 sowie innerhalb des Lichtdiffusionsschirms 13 steuerbare LED-Leuchtmittel 14 aufweist. Die Datenverarbeitungseinheit 3 ist zum Steuern der Ausrichtung des LASER-Generators 6 mittels des Ausrichtemittels 8 anhand von Ausrichteinformationen sowie zum Steuern des LED-Leuchtmittels 14 ausgebildet.

Das Luftfahrzeug 20 bildet somit anhand des LED-Leuchtmittels 14 und des Lichtdiffusionsschirms 13 einen diffusen Lichtpunkt im Luftraum, beispielsweise einen sogenannten "SPAXEL", wobei es anhand dieses Lichtpunkts und des LASER-Strahls 7 eine Abbildung im Luftraum erzeugen kann, wobei die Abbildung anhand der zeitlichen Veränderung der Position des Luftfahrzeugs 1 im Luftraum anhand der Positionsinformationen und/oder anhand der zeitlichen Veränderung der Ausrichtung des Ausrichtemittels 8 anhand der Ausrichteinformationen räumlich und zeitlich variiert werden kann.

Werden mehrere unbemannte Luftfahrzeuge 1, 10 und 20 in einem System zusammengeführt, beispielsweise in Form eines Schwarmverbunds, können diese in Formation gesteuert werden, um so während einer Abbildungsphase Abbildungen im Luftraum zu erstellen. Diese Abbildungen können groß angelegte und gut sichtbare Visualisierungen und Projektionen in Form dynamischer dreidimensionaler Figuren, die wiederverwendbar beziehungsweise im Wesentlichen abbildungsgleich wiederholbar, dynamisch und interaktiv sind.

Bei dem Luftfahrzeug 1, 10 oder 20 gemäß dem ersten, zweiten oder dritten Beispiel kann das LASER-Mittel zusätzlich oder alternativ einen LASER-Diffusor (nicht in den Figuren dargestellt), beispielsweise diffraktive optische Linsen oder Gitter, zum diffusen Zerstreuen eines LASER-Strahls 7 oder zum Multiplizieren, insbesondere Auffächern, eines LASER-Strahls 7 in mehrere LASER-Strahlen 7 aufweisen. Das Luftfahrzeug 1, 10 oder 20, beziehungsweise das LASER-Mittel, bildet somit einen Umlenkpunkt oder einen Multiplikatorpunkt des LASER-Strahls 7. Die Energie beziehungsweise der Lichtstrom des LASER-Strahls 7 wird dabei im Falle einer Multiplikation auf die mehreren LASER-Strahlen 7 aufgeteilt.

In Bezug auf das LASER-Mittel sind alle denkbaren Kombinationen von LASER-Generator 6, LASER-Reflektor 11, LASER-Absorber 12, LASER-Diffusor, Lichtdiffusionsschirm 13 und LED-Leuchtmittel 14, in und ohne Kombination mit dem Ausrichtemittel 8, möglich. Dies bedeutet, dass das LASER-Mittel jede beliebige Kombination und Anzahl dieser Vorrichtungen aufweisen kann. Zusätzlich kann es weitere denkbare Vorrichtungen zum Generieren, Abgeben oder Manipulieren von LASER-Strahlen, LASER-Elementen, LED-Elementen, weiterer Lichtstrahlen oder Licht-Elemente, etc. aufweisen.

Figur 4 zeigt ein derartiges erfindungsgemäßes System 15 aus drei unbemannten Luftfahrzeuge 1 und 10, wobei ein Luftfahrzeug 1 gemäß dem ersten Beispiel und zwei Luftfahrzeuge 10 gemäß dem zweiten Beispiel ausgebildet sind. Die Positionsinformationen und die Ausrichteinformationen sind als, auf die Abbildung Bezug nehmende Abbildungsinformationen ausgebildet.

Jedes Luftfahrzeug 1 und 10 stellt einen einzelnen Bildpunkt dar, und jedes Luftfahrzeug 1 und 10 manipuliert zumindest einen LASER-Strahl 7 oder gibt zumindest einen LASER-Strahl 7 ab. Die Datenverarbeitungseinheiten 3 der Luftfahrzeuge 1 und 10 kommunizieren mittels der jeweiligen Kommunikationseinheiten 5 wechselseitig im Wesentlichen in Echtzeit.

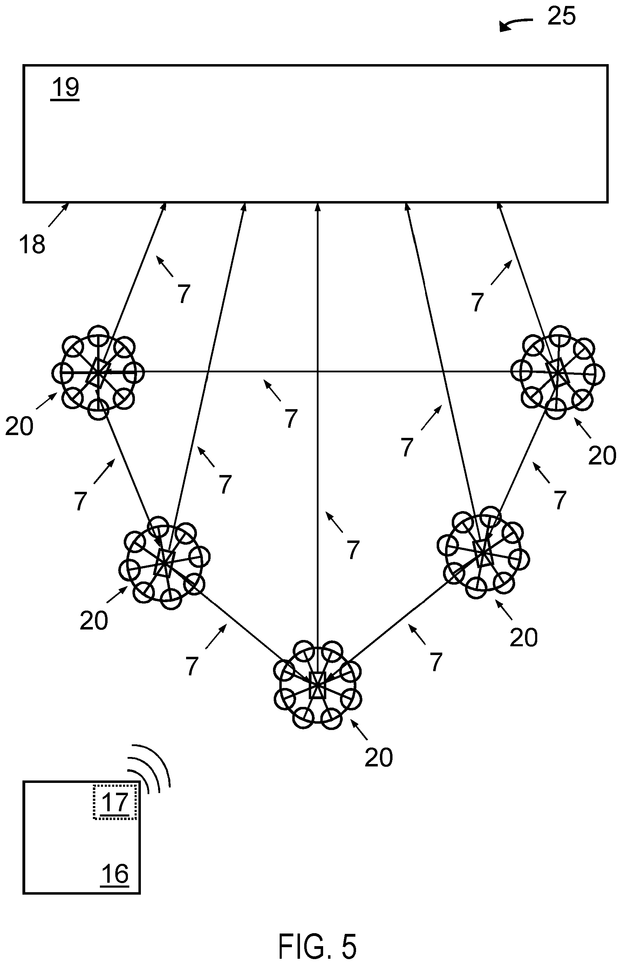

Figur 4 kann alternativ einen Ausschnitt eines Systems mit wesentlich mehr Luftfahrzeugen 1, 10 oder 20 darstellen, beispielsweise 100 und mehr Luftfahrzeuge 1, 10 oder 20. Hierdurch können unter der vorteilhaften Verwendung von LASER-Strahlen 7 besonders komplexe und besonders große Abbildungen mittels einer großen Anzahl von Luftfahrzeugen 1, 10 oder 20 im Luftraum geschaffen werden. Figur 5 zeigt in einer Ansicht ein weiteres System 25 aus fünf unbemannten Luftfahrzeugen 20 gemäß dem dritten Beispiel. Das System 25 weist zusätzlich eine Bodensteuereinheit 16 auf, die zum Speichern, Verarbeiten, Übermitteln und/ oder Empfangen der Abbildungsinformationen ausgebildet ist. Die Abbildungsinformationen werden von der Bodensteuereinheit 16, beispielsweise von einer Bodenkommunikationseinheit 17, über die Kommunikationseinheiten 5 der Luftfahrzeuge 20 im Wesentlichen in Echtzeit an die Datenverarbeitungseinheiten 3 der Luftfahrzeuge 20 übermittelt. Hierdurch können unter der vorteilhafte Verwendung von LASER-Strahlen 7 besonders komplexe und besonders große Abbildungen mittels einer großen Anzahl von Luftfahrzeugen 20, beispielsweise 100 und mehr, im Luftraum geschaffen werden, ohne dass die Luftfahrzeuge 20 miteinander kollidieren, wobei ein Teil der Luftfahrzeuge 20 oder alle Luftfahrzeuge 20 von der Bodensteuereinheit 16 gesteuert werden. Alternativ können diese Luftfahrzeuge 20 aber auch durch vorhergehende Speicherung der Positionen und ihrer zeitlichen Abläufe am Luftfahrzeug 20, diese Positionen selbsttätig, ohne Steuerung durch eine Bodeneinheit abfliegen.

Das System 25 weist zusätzlich eine ortsfeste Projektionsfläche 18, eine Fassade eines Gebäudes 19, auf, auf welche ein Teil der Abbildung projiziert wird. Hierdurch können Gebäude oder ganze Gebäudekomplexe, oder Landschaftszüge (wie etwa Felswände, Skipisten uvam) in die Abbildung miteinbezogen werden. Die Projektionsfläche 18 kann alternativ auch eine, durch die Luftfahrzeuge 20 im Luftraum positionierte Leinwand sein. Ein erfindungsgemäßes Verfahren zum Erzeugen einer Abbildung im Luftraum während einer Abbildungsphase mittels des Systems 25 wird anhand der Figur 5 folgend beschrieben:
Das System 25 ist beispielsweise dermaßen ausgeführt, dass die gesamten Abbildungsinformationen in einem Speicher der Bodensteuereinheit 16 gespeichert sind, und diese Abbildungsinformationen kontinuierlich von einer Steuersoftware abgerufen und über die Bodenkommunikationseinheit 17 und die Kommunikationseinheiten 5 an die Datenverarbeitungseinheiten 3 der Luftfahrzeuge 20 übermittelt werden. Dies bedeutet, dass während der gesamten Abbildungsphase folgende drei Verfahrensschritt A), B) und C) nacheinander und/ oder gleichzeitig in Bezug auf jedes der fünf Luftfahrzeuge 20 durchgeführt werden.

In einem Verfahrensschritt A) werden im Wesentlichen in Echtzeit die Abbildungsinformationen, welche im vorliegenden Fall Positionsinformationen und Ausrichteinformationen beinhalten und die im Speicher Bodensteuereinheit 16 gespeichert sind, an die Datenverarbeitungseinheiten 3 der Luftfahrzeuge 20 übermittelt. Die Datenverarbeitungseinheiten 3 steuern in einem Verfahrensschritt B) die Luftfahrzeuge 20 innerhalb des Luftraums im Wesentlichen in Echtzeit anhand der Abbildungsinformationen an die entsprechenden Positionen, beispielsweise gemäß Figur 5. In einem nachfolgenden Verfahrensschritt C) steuern die Datenverarbeitungseinheiten 3 die LASER-Mittel anhand der Abbildungsinformationen und richten diese mittels der Ausrichtemittel 8 aus. Dabei steuern die die Datenverarbeitungseinheiten 3 die LASER-Generatoren 6 der Luftfahrzeuge 20, wodurch diese LASER-Strahlen 7 erzeugen und abgeben. Gleichzeitig steuern und aktivieren die Datenverarbeitungseinheiten 3 die LED-Leuchtmittel 14 der Luftfahrzeuge 20.

Folglich bilden alle Luftfahrzeuge 20 einen vom Boden sichtbaren Bildpunkt. Gleichzeitig bilden die von den LASER-Generatoren 6 abgegebenen LASER-Strahlen 7 ein Muster aus Bildpunkten auf der Projektionsfläche 18. Die von den LASER-Generatoren 6 abgegebenen LASER-Strahlen 7 bilden ein Strichmuster zur Projektionsfläche 18 und zwischen den Luftfahrzeugen 20. Dabei reichen die LASER-Strahlen 7 zwischen den Luftfahrzeugen 20 über die Position des jeweiligen Luftfahrzeugs 20 hinaus, oder können alternativ auch von LASER-Absorbern 12, welche die LASER-Mittel der Luftfahrzeuge 20 zusätzlich aufweisen können, absorbiert werden. Dies würde zu einer Abbildung gemäß Figur 5 führen. Die auf die Projektionsfläche 18 abgegebenen LASER-Strahlen 7 können dabei beispielsweise mittels der LASER-Generatoren 6 und der Ausrichtemittel 8 ständig in ihrer Richtung verändert werden, wodurch ein dynamisches Strich-Punkt-Muster auf der Projektionsfläche 18 entsteht.

Nun können in einem weiteren, neuen Verfahrensschritt A) neue Abbildungsinformationen, von der Bodensteuereinheit 16 an die Datenverarbeitungseinheiten 3 der Luftfahrzeuge 20 übermittelt werden. Die Datenverarbeitungseinheiten 3 steuern in einem weiteren, neuen Verfahrensschritt B) die Luftfahrzeuge 20 innerhalb des Luftraums im Wesentlichen in Echtzeit anhand der Abbildungsinformationen an die entsprechenden neuen Positionen im Luftraum. Während dieser Verfahrensschritte können in einem weiteren, neuen Verfahrensschritt C) die Datenverarbeitungseinheiten 3 die LASER-Generatoren 6 anhand neuer Abbildungsinformationen steuern und mittels der Ausrichtemittel 8 ausrichten.

Die Verfahrensschritte A), B) und C) können im Wesentlichen in Echtzeit in beliebiger Reihenfolge nacheinander und/ oder gleichzeitig für alle Luftfahrzeuge 20 oder nur für Teile der Luftfahrzeuge 20 durchgeführt werden. Es können so dreidimensionale und dynamische, aus Bildpunkten und Strichen kombinierte Abbildungen im Luftraum bereitgestellt werden. Alternativ können diese Luftfahrzeuge aber auch durch vorhergehende Speicherung der Bildinformationen, der Positionen und ihrer zeitlichen Abläufe am Luftfahrzeug, diese Positionen selbsttätig, ohne Steuerung durch eine Bodeneinheit abfliegen.

Es kann erwähnt werden, dass ein erfindungsgemäßes System als Frühwarnsystem im Falle einer Katastrophe oder als Informationssystem bei Sportveranstaltungen wie ein Fahrradrennen oder einem Marathon eingesetzt werden kann. Weiters kann erwähnt werden, dass mit den LASER-Strahlen des LASER-Generators eine Vielzahl an Visualisierungsoptionen ermöglicht werden, wobei beispielsweise nicht nur Linien sondern auch Flächen für die Abbildung erzeugt werden können, die im Luftraum auch bewegt werden können.

Gemäß einem weiteren Ausführungsbeispiel der Erfindung könnte auch zusätzlich oder alternativ ein Ausrichtemittel oben an dem Luftfahrzeug befestigt sein, um mit einem LASER-Generator einen LASER-Strahl nach oben oder schräg oben bis zu im Wesentlichen horizontal von dem Luftfahrzeug abzugeben. Hiermit könnte ein nach oben gerichteter LASER-Strahl von dem Luftfahrzeug abgegeben werden, der fast endlos in den Himmel reicht oder in einem LASER-Absorber eines darüber fliegenden Luftfahrzeugs endet. Gemäß einem weiteren Ausführungsbeispiel der Erfindung sind zumindest zwei Luftfahrzeuge im Luftraum, wobei ein Luftfahrzeug das andere mit einem LASER-Strahl anleuchtet, der in dem LASER-Absorber des anderen Luftfahrzeugs endet. Hierfür müssen die Ausrichtemittel des LASER-Generators und des LASER-Absorbers eine möglichst große Dreh- bzw. Bewegungsfreiheit ermöglichen, also im Wesentlichen fast 360 Grad über die drei Raumachsen. Wenn diese Funktion mit der Konstruktion der Ausrichtemittel nicht mit nur einem LASER-Generator und nur einem LASER-Absorber möglich ist, dann bietet sich an sowohl nach oben hin als auch nach unten hin Ausrichtemittel mit einem LASER-Generator / LASER-Absorber an dem Luftfahrzeug anzubringen. Ein LASER-Absorber kann aber auch direkt ohne Ausrichtemittel an dem Luftfahrzeug befestigt sein und als geometrische Form (etwa Halbkugel, Kegel, oder Polygon) aus LASER-Strahlen absorbierendem Material realisiert sein.

Gemäß einem weiteren Ausführungsbeispiel der Erfindung können die LASER-Mittel durch einen Projektor gebildet sein, der nicht nur einen oder mehrere LASER-Strahlen sondern ein richtiges Bild oder einen Film mittels eines LASER-Generators in den Himmel auf eine Wolke oder eine Projektionsfläche abgibt. Hierdurch könnte ein überdimensionales Freiluftkino oder eine Warnung bei beispielsweise Naturkatastrophen für tausende von Menschen realisiert werden. Es könnten auch mehrerer nebeneinander und übereinander fliegende Luftfahrzeuge jeweils nur ein Teilbild projizieren, dass dann auf der Projektionsfläche zusammengesetzt dargestellt wird. Hierdurch könnte die Auflösung des projizierten Bildes oder Films wesentlich verbessert werden.

Gemäß einem weiteren Ausführungsbeispiel der Erfindung könne unbemannte Luftfahrzeuge mit LASER-Mitteln auch Indoor in beispielsweise einer Lagerhalle in einem Schwarmverbund gesteuert werden, um eine Abbildung im Luftraum der Lagerhalle oder an einer Projektionsfläche innerhalb der Lagerhalle darzustellen. Diese Luftfahrzeuge können vom Boden aus oder aber auch anhand von in Speichermitteln der Luftfahrzeuge gespeicherten Abbildungsinformationen gesteuert werden.

Die LASER-Mittel können auch in Form einer Halbkugel ausgebildet sein, wie dies von Überwachungskameras bekannt ist, in deren Inneren die Ausrichtemittel und der LASER-Generator oder der LASER-Absorber realisiert sind.

Der Begriff unbemanntes Luftfahrzeug ist im Rahmen dieser Erfindung sehr breit auszulegen und könnte beispielsweise auch Heißluftballone, Zeppeline, Modellflugzeuge oder Modellhubschrauber umfassen.

## Patentansprüche

1. System (15, 25) zum Erzeugen einer Abbildung im Luftraum bestehend aus zumindest zwei unbemannten Luftfahrzeugen (1, 10, 20), wobei jedes Luftfahrzeug (1, 10, 20) eine Antriebseinheit (2) zum Ermöglichen des Fluges des Luftfahrzeugs (1, 10, 20) im Luftraum, eine Datenverarbeitungseinheit (3) und eine Kommunikationseinheit (5) aufweist, wobei die Datenverarbeitungseinheit (3) zum Ansteuern einer Position oder einer zeitlichen Abfolge von Positionen des Luftfahrzeugs (1, 10, 20) im Luftraum anhand von Positionsinformationen und zum Empfangen und/oder Übermitteln der Positionsinformationen mittels der Kommunikationseinheit (5) in Echtzeit ausgebildet ist, und wobei zumindest ein erstes Luftfahrzeug (1) einen LASER-Generator (6) zum Abgeben eines LASER-Strahls (7) aufweist, **dadurch gekennzeichnet, dass** zumindest ein zweites Luftfahrzeug (10) ein LASER-Mittel zum Manipulieren des von dem LASER-Generator (6) des ersten Luftfahrzeugs (1)
abgegebenen LASER-Strahls (7) aufweist, wobei die Datenverarbeitungseinheiten (3) dazu ausgebildet sind, während einer Abbildungsphase den LASER-Generator (6) und das LASER-Mittel des jeweiligen Luftfahrzeugs derart zu steuern, dass die Abbildung im Luftraum aus dem abgegebenen und manipulierten LASER-Strahl (7) erzeugt wird, wobei die Positionsinformationen als, auf die Abbildung Bezug nehmende Abbildungsinformationen ausgebildet sind.

2. System (15, 25) gemäß Anspruch 1, **dadurch gekennzeichnet, dass** zumindest eines der Luftfahrzeuge (1, 10, 20) Ausrichtemittel (8) aufweist, wobei die Positionsinformationen und die Ausrichteinformationen als, auf die Abbildung Bezug nehmende Abbildungsinformationen ausgebildet sind.

3. System (15, 25) gemäß Anspruch 1 oder 2, **dadurch gekennzeichnet, dass** die Datenverarbeitungseinheiten (3) der Luftfahrzeuge (1, 10, 20) mittels der jeweiligen Kommunikationseinheiten (5) zum wechselseitigen Kommunizieren im Wesentlichen in Echtzeit ausgebildet sind, wodurch die Luftfahrzeuge (1, 10, 20) im Luftraum in einem Schwarmverbund ansteuerbar sind.

4. System (25) gemäß einem der Ansprüche 1 bis 3, **dadurch gekennzeichnet, dass** das System (25) zusätzlich eine Bodensteuereinheit (16), die zum Speichern, Verarbeiten, Übermitteln und/ oder Empfangen der Abbildungsinformationen ausgebildet ist, aufweist, wobei die Abbildungsinformationen mittels einer Bodenkommunikationseinheit (17) der Bodensteuereinheit (16) über die Kommunikationseinheiten (5) der Luftfahrzeuge (1, 10, 20) im Wesentlichen in Echtzeit an die Datenverarbeitungseinheiten (3) der Luftfahrzeuge (1, 10, 20) übermittelt werden.

5. System (25) gemäß einem der Ansprüche 1 bis 4, **dadurch gekennzeichnet, dass** das System (25) zusätzlich eine ortsfeste Projektionsfläche (18) aufweist, auf die die Abbildung projiziert wird.

6. Verfahren zum Erzeugen einer Abbildung im Luftraum während einer Abbildungsphase mittels eines Systems (15, 25) gemäß einem der Ansprüche 1 bis 5, mit den folgenden Verfahrensschritten:
A) Ubermitteln von Abbildungsinformationen an die Datenverarbeitungseinheit (3) jedes der Luftfahrzeuge (1, 10, 20);
B) Ansteuern der Luftfahrzeuge (1, 10, 20) innerhalb des Luftraums mittels der Datenverarbeitungseinheit (3) im Wesentlichen in Echtzeit anhand der Abbildungsinformationen,
wobei vor dem, während des oder nach dem Verfahrensschritt(s) B) zumindest ein LASER-Strahl (7) mittels des zumindest einen LASER-Mittels manipuliert wird.

7. Verfahren gemäß Anspruch 6, wobei vor dem, während oder nach dem Verfahrensschritt B) in einem Verfahrensschritt C) das LASER-Mittel von der Datenverarbeitungseinheit (3) mittels eines Ausrichtemittels (8) anhand der
Abbildungsinformationen gesteuert wird, wobei vor den, während der oder nach den Verfahrensschritten B) und/ oder C) zumindest ein LASER-Strahl (7) mittels des zumindest einen LASER-Mittels manipuliert wird.

## Claims

1. A system (15, 25) for creating an image in the air, consisting of at least two unmanned aerial vehicles (1, 10, 20), wherein each aerial vehicle (1, 10, 20) comprises a propulsion unit (2) for enabling the aerial vehicle (1, 10, 20) to fly in the air, a data processing unit (3), and a communication unit (5), wherein the data processing unit (3) is adapted to control a position or a temporal sequence of positions of the aerial vehicle (1, 10, 20) in the air based on positional information and for receiving and/or transmitting the positional information by means of the communication unit (5) in real time, and wherein at least one first aerial vehicle (1) comprises a LASER generator (6) for emitting a LASER beam (7), **characterized in that** at last one second aerial vehicle (10) comprises a LASER means for manipulating the LASER beam (7) emitted by the LASER generator (6) of the first aerial vehicle (1), wherein the data processing units (3) are adapted to control the LASER generator (6) and the LASER means of the respective aerial vehicle during an image phase so that the image is created in the air by the emitted and manipulated LASER beam (7), wherein the positional information is provided as image information referring to the image.

2. The system (15, 25) according to claim 1, **characterized in that** the at least one of the unmanned aerial vehicles (1, 10, 20) comprises orientation means (8), wherein the positional information and the orientation information is provided as image information referring to the image.

3. The system (15, 25) according to claim 1 or 2, **characterized in that** the data processing units (3) of the aerial vehicles (1, 10, 20) are adapted to mutually communicate via the respective communication units (5) essentially in real time, so that the aerial vehicles (1, 10, 20) in the air are controllable in a swarm.

4. The system (25) according to any one of the claims 1 to 3, **characterized in that** the system (25) additionally comprises a ground control unit (16), which is adapted to store, process, transmit and/or receive the image information, wherein the image information is transmitted by means of a ground communication unit (17) of the ground control unit (16) via the communication units (5) of the aerial vehicles (1, 10, 20) essentially in real time to the data processing units (3) of the aerial vehicles (1, 10, 20).

5. The system (25) according to any one of the claims 1 to 4, **characterized in that** the system (25) additionally comprises a stationary projection surface (18) onto which the image is projected.

6. A method for creating an image in the air during an image phase by means of a system (15, 25) according to any one of the claims 1 to 5, **characterized by** the following process steps:
A) transmitting image information to the data processing unit (3) of each of the aerial vehicles (1, 10, 20);
B) steering the aerial vehicles (1, 10, 20) in the air by means of the data processing unit (3) essentially in real time based on the image information,
wherein before, during or after the process step B) at least one LASER beam (7) is manipulated via the at least one LASER means.

7. The method according to claim 6, wherein before, during or after the process step B), in a process step C), the LASER means is controlled by the data processing unit (3) via an orientation means (8) based on the image information, wherein before, during or after the process steps B) and/or C) at least one LASER beam (7) is manipulated via the at least one LASER means.

## Revendications

1. Système (15, 25) de création d'une représentation dans l'espace aérien constituée d'au moins deux aéronefs inconnus (1, 10, 20), dans lequel chaque aéronef (1, 10, 20) possède un groupe moteur (2) pour permettre le vol de l'aéronef (1, 10, 20) dans l'espace aérien, une unité de traitement de données (3) et une unité de communication (5), dans lequel l'unité de traitement de données (3) est configurée pour contrôler une position ou une succession temporelle de positions de l'aéronef (1, 10, 20) dans l'espace aérien à l'aide d'informations de positionnement et pour recevoir et/ou transmettre les informations de positionnement au moyen de l'unité de communication (5) en temps réel, et dans lequel un premier aéronef (1) possède un générateur laser (6) pour émettre un rayon laser (7), **caractérisé en ce qu'**au moins un deuxième aéronef (10) possède un moyen laser pour manipuler le rayon laser (7) émis par le générateur laser (6) du premier aéronef (1), les unités de traitement de données (3) étant configurées pour contrôler pendant une phase de création le générateur laser (6) et le moyen laser de l'aéronef concerné de sorte que la représentation est créée dans l'espace aérien à partir du rayon laser (7) émis et manipulé, les informations de positionnement étant configurées comme des informations de représentation relatives à la représentation.

2. Système (15, 25) selon la revendication 1, **caractérisé en ce qu'**au moins un des aéronefs (1, 20, 20) possède des moyens d'orientation (8), dans lequel les informations de positionnement et les informations d'orientation sont configurées comme des informations de représentation relatives à la représentation.

3. Système (15, 25) selon la revendication 1 ou 2, **caractérisé en ce que** les unités de traitement de données (3) des aéronefs (1, 10, 20) sont configurées pour communiquer entre elles sensiblement en temps réel au moyen des unités de communication (5) correspondantes, de sorte à pouvoir contrôler les aéronefs (1, 10, 20) en essaim dans l'espace aérien.

4. Système (15, 25) selon une des revendications 1 à 3, **caractérisé en ce que** le système (25) possède une unité de contrôle au sol (16) qui est configurée pour mémoriser, traiter, transmettre et/ou recevoir les informations de représentation, dans lequel les informations de représentation sont transmises au moyen d'une unité de communication au sol (17) de l'unité de contrôle au sol (16) par les unités de communication (5) des aéronefs (1, 10, 20) sensiblement en temps réel aux unités de traitement de données (3) des aéronefs (1, 10, 20).

5. Système (25) selon une des revendications 1 à 4, **caractérisé en ce que** le système (25) possède en outre une surface de projection fixe (18) sur laquelle la représentation est projetée.

6. Procédé de création d'une représentation dans l'espace aérien pendant une phase de représentation au moyen d'un système (15, 25) selon une des revendications 1 à 5, comprenant les étapes de procédé suivantes :
A) transmission d'informations de représentation à l'unité de traitement de données (3) de chacun des aéronefs (1, 20, 20) et
B) contrôle des aéronefs (1, 20, 20) à l'intérieur de l'espace aérien au moyen de l'unité de traitement de données (3) sensiblement en temps réel à l'aide des informations de représentation,
dans lequel, avant, pendant ou après l'étape de procédé B), au moins un rayon laser (7) est manipulé au moyen de l'au moins un moyen laser.

7. Procédé selon la revendication 6, dans lequel, avant, pendant ou après l'étape de procédé B), dans une étape de procédé C), le moyen laser est contrôlé par l'unité de traitement de données (3) au moyen d'un moyen d'orientation (8) à l'aide des informations de représentation, et dans lequel, avant, pendant ou après les étapes de procédé B) et/ou C), au moins un rayon laser (7) est manipulé au moyen de l'au moins un moyen laser.
